(19) Europäisches Patentamt / European Patent Office / Office européen des brevets

(11) **EP 3 054 686 B1**

(12) **EUROPEAN PATENT SPECIFICATION**

(45) Date of publication and mention of the grant of the patent:
**11.07.2018 Bulletin 2018/28**

(21) Application number: **16152696.7**

(22) Date of filing: **26.01.2016**

(51) Int Cl.:
*H04N 19/53* (2014.01)   *H04N 19/543* (2014.01)
*G06T 7/215* (2017.01)   *G06T 7/207* (2017.01)
*H04N 5/14* (2006.01)

(54) **HIERARCHICAL MOTION ESTIMATION AND VIDEO SEGMENTATION IN PRESENCE OF MORE THAN ONE MOVING OBJECT IN A BLOCK**

HIERARCHISCHE BEWEGUNGSSCHÄTZUNG UND SEGMENTIERUNG IM FALL VON MEHR ALS EINEM SICH BEWEGENDEN OBJEKT IN EINEM SUCHFENSTER

ESTIMATION DE MOUVEMENT HIÉRARCHIQUE ET SEGMENTATION EN PRÉSENCE DE PLUS D'UN OBJET MOBILE DANS UNE FENÊTRE DE RECHERCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.02.2015 EP 15305162**

(43) Date of publication of application:
**10.08.2016 Bulletin 2016/32**

(73) Proprietor: **Thomson Licensing**
**92130 Issy-les-Moulineaux (FR)**

(72) Inventor: **Hepper, Dietmar**
**30419 Hannover (DE)**

(74) Representative: **Huchet, Anne et al**
**TECHNICOLOR**
**1-5, rue Jeanne d'Arc**
**92130 Issy-les-Moulineaux (FR)**

(56) References cited:
**WO-A2-2006/116712**

- LI W ET AL: "IMAGE SEQUENCE CODING BY MULTIGRID MOTION ESTIMATION AND SEGMENTATION BASED CODING OF PREDICTION ERRORS", PROCEEDINGS OF SPIE, S P I E - INTERNATIONAL SOCIETY FOR OPTICAL ENGINEERING, US, vol. 2094, 1 November 1993 (1993-11-01), pages 542-552, XP000826905, ISSN: 0277-786X, DOI: 10.1117/12.157973 ISBN: 978-1-62841-684-8
- GILGE M ED - TORRES L ET AL: "REGION-ORIENTED TEXTURE CODING", 1 January 1996 (1996-01-01), VIDEO CODING : THE SECOND GENERATION APPROACH, DORDRECHT : KLUWER ACADEMIC PUBL, NL, PAGE(S) 171 - 218,TITLEPAGE, XP000976931, ISBN: 978-0-7923-9680-2 * Sections 5 and 5.1 *
- BIN QI ET AL: "Robust and Fast Global Motion Estimation Oriented to Video Object Segmentation", IMAGE PROCESSING, 2005. ICIP 2005. IEEE INTERNATIONAL CONFERENCE ON, IEEE, PISCATAWAY, NJ, USA,IEEE, vol. 1, 11 September 2005 (2005-09-11), pages 153-156, XP010850709, DOI: 10.1109/ICIP.2005.1529710 ISBN: 978-0-7803-9134-5

**Description**

Technical field

The invention relates to a method and to an apparatus for hierarchical motion estimation in which motion vectors are refined in successive levels of increasing search window pixel density and/or decreasing search window size.

Background

Estimation of motion between frames of image sequences is used for applications such as targeted content and in digital video encoding. Known motion estimation methods are based on different motion models and technical approaches such as gradient methods, block matching, phase correlation, 'optical flow' methods (often gradient-based) and feature point extraction and tracking. They all have advantages and drawbacks. Orthogonal to and in combination with one of these approaches, hierarchical motion estimation allows a large vector search range and is typically combined with block matching, cf. [1], [2].

In motion estimation generally a cost function is computed by evaluating the image signal of two image frames inside a measurement window.

Motion estimation faces a number of different situations in image sequences. A challenging one is when motion is estimated for an image location where there are different objects moving at different speed and/or direction. In this case the measurement window covers these different objects so that the motion estimator is distracted by objects other than the intended one.

In [3] a method of estimating correspondences between stereo pairs of images is presented. In determining the cost function, the method targets to weight pixels "in proportion of the probability that the pixels have the same disparity". In order to approach this objective, pixels with similar colour and located nearby are preferred by means of two kinds of weights (involving factors determined empirically): one related to colour difference, the other related to spatial distance. Unfortunately that method has inherent problems with periodic structures because pixels with same or similar colour but a certain distance apart may mislead the motion estimator. Also its concept does not attempt to consider different motion.

In [4] a hierarchical motion estimation scheme is disclosed, in which the possible presence of objects with different motions within a block is taken into account by using adaptive quadtree block partitioning.

Summary of invention

A problem to be solved by the invention is to provide reliable motion estimation for image sequences even in situations or locations where the measurement or search window of the motion estimator covers different objects with different motion. This problem is solved by the method disclosed in claim 1. A hierarchical motion estimator that utilises this method is disclosed in claim 2.

Advantageous additional embodiments of the invention are disclosed in the respective dependent claims.

Hierarchical motion estimation is used with several levels of hierarchy. In each level the image is prefiltered, e.g. by means of a 2D mean value filter of an appropriate search window size, the filtering strength being reduced from level to level, e.g. by reducing the window size. In each level a block matcher can be used for determining a motion vector for a marker position or a subset of pixels or every pixel of the whole frame in a certain pixel grid. Within the measurement window, the image signal for the related sections of the two frames compared is subsampled as allowed according to the strength of the prefilter. A motion vector (update) is computed, e.g. by log(D)-step search or full search, which optimises a cost function, e.g. by minimising SAD (sum of absolute differences) or SQD (sum of squared differences). Motion estimation is carried out with integer-pel resolution first, followed by sub-pel refinement, thereby also reducing computational complexity. The processing described provides a motion vector typically applying to the centre pixel of the measurement window.

By evaluating the displaced frame differences in the measurement window - after finding an optimum vector at a certain pixel - a segmentation of the measurement window into different moving object regions is carried out. A corresponding segmentation mask is stored and used as an initial mask in the next level of the hierarchy, and a new mask is determined at the end of this level. Several embodiments further enhance the performance of the basic concept.

Advantageously, the described processing allows estimating motion and tracking of image content or points of interest with improved reliability and accuracy in situations or image locations where different objects are moving at different speed and/or direction.

In principle, the inventive method is adapted for hierarchical motion estimation in which motion vectors are refined in successive levels of increasing search window pixel density and/or decreasing search window size, including the steps:

- within each hierarchical level, after finding an optimum vector at at least one pixel, determining based on said optimum vector the displaced frame difference or absolute displaced frame difference for each pixel of the search window;
- determining within said search window two or more groups of these pixels, wherein each of these pixel groups is characterised by a different range of displaced frame difference values or absolute displaced frame difference values for the pixels;
- carrying out a segmentation of the search window into different moving object regions by forming pixel areas according to said groups, which areas represent a segmentation mask for the search window;
- estimating for at least one of said segmentation areas a corresponding motion vector.

In principle, in the inventive hierarchical motion estimator motion vectors are refined in successive levels of increasing search window pixel density and/or decreasing search window size, said hierarchical motion estimator including means adapted to:

- within each hierarchical level, after finding an optimum vector at at least one pixel, determining based on said optimum vector the displaced frame difference or absolute displaced frame difference for each pixel of the search window;
- determining within said search window two or more groups of these pixels, wherein each of these pixel groups is characterised by a different range of displaced frame difference values or absolute displaced frame difference values for the pixels;
- carrying out a segmentation of the search window into different moving object regions by forming pixel areas according to said groups, which areas represent a segmentation mask for the search window;
- estimating for at least one of said segmentation areas a corresponding motion vector.

Brief description of drawings

Exemplary embodiments of the invention are described with reference to the accompanying drawings, which show in:

Fig. 1    A foreground object moving relative to a background object, and examples where the measurement window of the motion estimator contains image information of one or more objects;
Fig. 2    Block diagram of a hierarchical motion estimator;
Fig. 3    Example of displacement estimation using four levels of hierarchy;
Fig. 4    Example for log(D)-step search in every level of the hierarchy;
Fig. 5    Principle of quasi-subsampling in a measurement window;
Fig. 6    Principle of quasi-subsampling in a measurement window containing an object boundary;
Fig. 7    Block diagram of a hierarchical motion estimator using segmentation;
Fig. 8    Hierarchical motion estimator with segmentation initialisation;
Fig. 9    Further embodiment of a hierarchical motion estimator with segmentation initialisation;
Fig. 10   Cost computation in motion estimation using segmentation information.

Description of embodiments

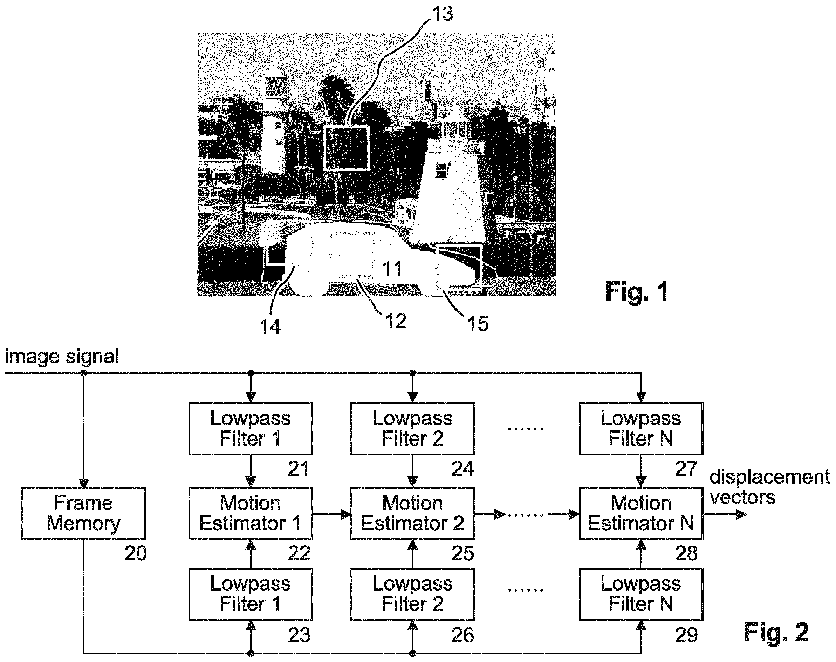

Even if not explicitly described, the following embodiments may be employed in any combination or sub-combination.
If an image sequence contains two or more objects moving in different directions and/or at different speed, the measurement or search window of a (hierarchical) motion estimator - when lying at their edge - will contain image information of all these objects. Fig.1 shows foreground object 11 moving relative to a background object and examples where the measurement window of the motion estimator contains image information of one object (12, 13) or more objects (14, 15). Thus there are two or more image parts inside the measurement window moving in different directions and requiring an individual motion vector while known motion estimators can provide just one representative vector, whereby in practise the resulting vector is mostly good and applicable for only one part of the measurement window.
With every hierarchy level the hierarchical motion estimator provides true motion vectors closer towards object boundaries (e.g. of a truck on a road), due to the decreasing grid size (i.e. distance of pixels for which a vector is estimated) and/or decreasing size of the measurement window, but not at the boundaries themselves. In the motion compensated image, high 'displaced frame differences' (DFD) remain around moving objects, in structured areas of medium-size moving objects, in or around uncovered background regions, and throughout small moving objects, or at least at their front and rear if they are less textured (e.g. a car moving behind a bush).

During the motion estimation process - along the levels of the hierarchy or in the search steps of one level - the measurement window may contain well-matched pixels with a low absolute difference (AD) and other pixels with a high AD, all of which add to the sum of absolute differences (SAD) or the sum of differences for a certain test vector. If a vector is to be estimated for a specific pixel location - especially for point-of-interest tracking -, ideally that part of the measurement window should be evaluated only which belongs to the same object as that pixel.

In some situations the motion estimator may therefore be misled, e.g. where a foreground object passes by near a point of interest. In such case much of the measurement window is occupied by the misleading object. An improvement can be achieved by taking the vector estimated for the same point of interest in the preceding frame and using it as a candidate vector in the search in the present frame.

During the exposure time (which typically is longer under low-light conditions for instance) the sensor elements of a camera integrate the incoming light so that an object moving at high speed relative to the sensor may be blurred. The boundary of a foreground object moving relative to a background object may be smeared and wide, rather than being sharp and narrow. Such situation, however, might be similar in successive frames - a smeared boundary is estimated with respect to a smeared boundary - so that the location of the object boundary might not need to be known with the highest precision.

In cases where the foreground object is e.g. a fence through which a background object is seen (between its pickets), an ideal motion estimator would distinguish the two objects inside the measurement window. That is, the decision whether a pixel belongs to the one object or the other is to be taken based just on that sole pixel rather than on its spatial neighbourhood which may belong to another object.

*A. Distinguishing different object areas in the measurement window*

*A.1 Basic processing* at *the end of the first level of hierarchy*

A first approach of distinguishing different object areas in the measurement window is this: for a vector found at a certain pixel location by the end of the first (i.e. coarsest) level of the hierarchy, the cost function of all pixels in the measurement window is analysed. If the DFD or absolute DFD is low for the centre pixel then all other picture elements in the measurement window that have a low DFD or absolute DFD are considered as belonging to the same object as that centre pixel. Otherwise, if the DFD or absolute DFD is high for the centre pixel then all other picture elements in the measurement window that have a high DFD or absolute DFD are considered as belonging to the same object as that centre pixel.

DFDs or absolute DFDs can be related to or translated into probabilities of belonging to the same or another object, resulting in a more continuous decision than a binary one. Such probability, related to an object, reflects also the part of the exposure time for which the camera sensor element has seen that object as mentioned above.

As a first approach, a mask with three possible values '0', '0.5' and '1' is computed by comparing the DFD or absolute DFD of each pixel ($x,y$) against two thresholds:

$$mask(x,y) = \begin{cases} 0 & \text{if } |DFD(x,y)| < thr_{low} \\ 1 & \text{if } |DFD(x,y)| > thr_{high} \\ 0.5 & \text{otherwise} \end{cases} . \qquad (1)$$

The '0' and '1' values denote different object areas while the value of (e.g.) '0.5' expresses some uncertainty. A low absolute DFD thus turns into a mask value of '0' which represents object number '0'.

$mask(x,y)$ represents a finer and continuous function that translates the absolute DFD into a probability between '0' and '1'. One example is the non-linear function

$$mask(x,y) = \min\left(1, \max\left(0, \frac{|DFD(x,y)| - thr_{low}}{thr_{high} - thr_{low}}\right)\right) . \qquad (2)$$

Again, a low absolute DFD turns into a mask value of '0' and represents object number '0'.

A further improvement can be a function (continuously differentiable) with a smooth rather than sharp transition at $thr_{low}$ and $thr_{high}$. The following is an exponential function which starts steep and has a saturation towards higher values of $|DFD(x,y)|$:

$$mask(x,y) = \max\left(0, 1 - e^{-\frac{|DFD(x,y)| - thr_{low}}{thr_{high} - thr_{low}}}\right) \;, \qquad (3)$$

wherein $thr_{high}$ determines the gradient of the function at $|DFD(x,y)| = thr_{low}$ which gradient is $1/(thr_{high} - thr_{low})$.

For proper setting of the $thr_{low}$ value, e.g. the noise level present in the image sequence can be taken into account.

*A.2 Improvement of initial identification of object areas*

Another motion estimation step may then be appended,

- either a complete same level of the hierarchy with its log (D) - step search,
- or just some of its search steps,
- or just the next level of the hierarchy,

evaluating just that part of the measurement window given by the above mask, in order to evaluate only that part of the window belonging to the first object.

In case there still remain high absolute DFD values in this part of the window, this may indicate the presence of another object moving with a different speed and/or direction of motion, i.e. with a different motion vector. Therefore the process can be repeated with a further reduced part of the measurement window, and corresponding to further subdivision of the object area which has been identified first.

*A.3 Initialisation of object mask*

*A.3.1 First level of the hierarchy*

Before starting motion estimation in the present frame, the information about the shape of the areas within the measurement window and the motion of the two (or more) areas of the measurement window in the previous frame (see above) can be used for predicting or deriving an initial segmentation of the measurement window in the present frame for use in its first (i.e. coarsest) level of the hierarchy. This will reduce the risk of arriving at a false motion estimate right in the beginning if the disturbing object is prominent in its influence, even though perhaps not big in size.

In a simplified alternative just one vector is estimated and provided. Before starting motion estimation in the present frame, the information about the shape of the area in the measurement window and maybe also the single motion vector of the window in the previous frame could be used to predict or derive an initial segmentation of the measurement window in the present frame for use in its first level of the hierarchy. Although the window could already contain a bit of a disturbing object which may have moved by a different amount, this portion will, when the object starts entering the window, be small enough to make this processing still successful.

An enhanced processing can modify the mask values in an appropriate way in case they are continuous.

The first approach is to use the mask derived in the previous frame, with the simplifying assumption that the other object is still at the same relative position. In fact, there will be a spatial offset resulting from the relative true motion of the two objects.

Because this initial mask is used (only) for the first level of the hierarchy of the present frame, it can be just the mask resulting from the first level of the hierarchy of the previous frame since this refers to the same sampling grid.

*A.3.2 Second and further levels of the hierarchy*

There are challenging situations where the mask resulting from the first level of the hierarchy in the present frame is not useful for the second level as it masks off (far) less pixels than the initial mask obtained from the previous (*prev*) frame. To overcome such situations, the initial mask can be combined with the present (*pres*) mask resulting from the first level, e.g. by:

- averaging the two masks:

$$mask_{2,pres}(x,y) = (mask_{1,prev}(x,y) + mask_{1,pres}(x,y))/2 \;; \qquad (4)$$

- averaging the two masks in a weighted fashion, the weights relating e.g. to the relation of the sums of the mask entries (a high sum relates to a high number of pixels masked off which is supposed to mean a reliable mask):

$$w_{prev} = \frac{\sum_{x,y} mask_{1,prev}(x,y)}{\sum_{x,y} mask_{1,prev}(x,y) + \sum_{x,y} mask_{1,pres}(x,y)} \quad ; \qquad (5)$$

$mask_{2,pres}(x,y) = w_{prev} \cdot mask_{1,prev}(x,y) + (1 - w_{prev}) \cdot mask_{1,pres}(x,y);$ (6)

- preferring the initial mask obtained from the previous frame and neglecting the new one if the sum of the initial mask's entries is higher:

$$mask_{2,pres}(x,y) = mask_{1,prev}(x,y) \quad . \qquad (7)$$

Likewise, from the second level of the hierarchy onwards up to the finest level, the mask obtained from the previous level $n$ - 1 of the hierarchy in the previous frame can be used instead of the mask obtained from the previous level in the present frame, if the change in length of the present estimated vector compared to the length of the corresponding estimated vector of the previous frame is too large (e.g. by more than a safety factor of '4'):

$$mask_{n,pres}(x,y) = mask_{n-1,prev}(x,y) \quad . \qquad (8)$$

In addition, also the vector obtained from the previous frame can be used instead of the present estimated vector if the change in the vector length is too large (e.g. by more than a safety factor of '4'):

$$\hat{\vec{d}}_{n,pres}(x,y) = \hat{\vec{d}}_{prev}(x,y) \quad . \qquad (9)$$

*A.4 Utilising location information in next level of hierarchy*

In the next level of the motion estimation hierarchy, the sections of the measurement window identified in the previous level (and stored for every point of interest to be tracked, or for the complete image) is considered in the motion estimation from the beginning. Interpolation (or repetition of nearest neighbour) of this information to the mostly denser sampling inside the new measurement window is performed, as well as cutting away boundary areas in order to fit the new smaller window.

Because the location information relates to the reference image rather than the search image and therefore does not depend on the motion vector, interpolation to the original sampling grid of the image will probably not be necessary.

A useful segmentation mask is needed from the first level of the hierarchy in order to make further steps successful. This may be difficult in situations where another object enters and covers much (e.g. half) of the measurement window area while the motion estimator finds a match for the other object with significant DFDs only for a few remaining pixels in the window.

*A.5 Update of identification of object areas in each level*

At the end of each hierarchical motion estimation level the cost function of all picture elements in the measurement window (without using a mask) using the newly determined vector is analysed and segmented as above, and the shape of the part of the measurement window to be used for motion estimation of the centre pixel is thus updated and refined. This is continued through the following levels of the hierarchy (maybe not through all of them) unless the search window becomes too small.

*B. Using probability values in cost function*

The mask or probability values defined above can be translated (by a given function) into weighting factors for the absolute DFDs inside the measurement window when computing the cost estimate. If a mask value of '0' is supposed to relate perfectly to the intended object area (i.e. object number '0'), the mask values are 'inverted', i.e. subtracted from '1' in order to derive a probability belonging to that object:

$$p_0(x,y) = 1 - mask(x,y) \ , \tag{10}$$

$$cost = \sum_{x,y} w\big(p_0(x,y)\big) \cdot |DFD(x,y)| \ . \tag{11}$$

In a different embodiment, the probability values themselves are used as weighting factors:

$$cost = \sum_{x,y} p_0(x,y) \cdot |DFD(x,y)| \ . \tag{12}$$

Depending on the low or high value of the absolute DFD of the centre pixel, or if motion estimation is carried out for the remaining part of the measurement window, the probability values can be 'inverted', i.e. subtracted from '1' in order to derive their proper meaning:

$$p_1(x,y) = 1 - p_0(x,y) = mask(x,y) \ , \tag{13}$$

whereby a segmentation mask masking off disturbing pixels is used to make this method successful.

*C. Signal-based and distance-based weights in cost function*

In [3] a method of stereo matching (called "visual correspondence search") is presented, i.e. an estimation of correspondences between stereo pairs of images. The application involves different perspectives and different depths. In determining the cost function (called "dissimilarity") the method targets to weight pixels "in proportion of the probability that the pixels have the same disparity". In order to achieve this objective, pixels with similar colour and located nearby are preferred. A pixel $q$ in the measurement window (called "support window") is weighted by a factor

$$w(p,q) = k \cdot f_s(\Delta c_{pq}) \cdot f_p(\Delta g_{pq}) \tag{14}$$

that includes a constant $k$ and two weights $f_s$ and $f_p$ which depend on the colour difference (Euclidean distance in colour space) and the spatial distance of the pixels (and which weights are called "strength of grouping by colour similarity" and "strength of grouping by proximity", respectively) with

$$\Delta c_{pq} = \sqrt{\left(L_p - L_q\right)^2 + \left(a_p - a_q\right)^2 + \left(b_p - b_q\right)^2} \tag{15}$$

defined in the CIE Lab colour space (which uses $L$ = 0 ... 100, $\alpha$ = -150... + 100, $b$ = -100... + 150 and which is related to human visual perception) and

$$f_s\big(\Delta c_{pq}\big) = exp\left(-\frac{\Delta c_{pq}}{\gamma_c}\right) \ , \tag{16}$$

$$f_p\big(\Delta g_{pq}\big) = exp\left(-\frac{\Delta g_{pq}}{\gamma_p}\right) \tag{17}$$

given without explanation, and probably (not given in the paper) with

$$\Delta g_{pq} = \sqrt{\left(x_p - x_q\right)^2 + \left(y_p - y_q\right)^2} \ . \tag{18}$$

The constants are given as $\gamma_c$ = 7 which is said to be a typical value (might refer to the CIELab signal value ranges, maybe to 100), and $y_p$ = 36 is determined empirically (might refer to the pixel grid as in another paper by the same authors in which the window size is 35×35 pixels and $y_p$ = 17.5 which is said to be the radius of the window).

A measurement window e.g. of size 33×33 is used. The processing is not hierarchical.

That idea is transferred to motion estimation between successive frames by means of hierarchical motion estimation.

For simplicity,

$$ost = \sum_{x,y} w(x,y) \cdot |DFD(x,y)| \quad , \qquad (19)$$

using luminance only (rather than R, G and B), $k$ = 1, and scaling $\gamma_c$ to the bit depth $b$ of the image signal:

$$\gamma_c{'} = \gamma_c \cdot \frac{2^b - 1}{100} \quad , \qquad (20)$$

and modifying $y_p$ by considering the factor $s$ of subsampling in the measurement window performed in combination with prefiltering the image signal in the levels of the hierarchy:

$$\gamma_p' = \gamma_p \cdot s \quad . \qquad (21)$$

*D. Description of figures*

The hierarchical motion estimator in Fig. 2 can be used for forward or backward motion estimation (denoted ME). The image input signal is fed to a set of lowpass filters 21, 24, 27 with increasing pass bandwidth, and via a frame memory 20 to a corresponding set of lowpass filters 23, 26, 29 with correspondingly increasing pass bandwidth. The output signals of lowpass filters 21 and 23 are used for motion estimation 22 in the first (i.e. the coarsest) hierarchy level. The output signals of lowpass filters 24 and 26 are used for motion estimation 25 in the second hierarchy level, and so on. The output signals of lowpass filters 27 and 29 are used for motion estimation in the last (i.e. finest) hierarchy level. Motion estimator 22 passes its motion vector or vectors found to motion estimator 25 for update. Motion estimator 25 passes its motion vector found to motion estimator 28 for update, and motion estimator 28 outputs the final displacement vector or vectors.

An example parameter set for 6 levels of hierarchy is:

| | | | | | |
|---|---|---|---|---|---|
| Lowpass filter window size: | [17 | 9 | 9 | 5 | 5 | 3] |
| Vector array grid size iGrid: | [64 | 32 | 16 | 8 | 4 | 2] |
| Search range (+/-): | [63 | 31 | 15 | 7 | 3 | 1] |
| Measurement window size iMeasWin: | [257 | 209 | 129 | 65 | 25 | 13] |
| Factor iSub of subsampling inside measurement window: | [16 | 8 | 8 | 4 | 4 | 2] |

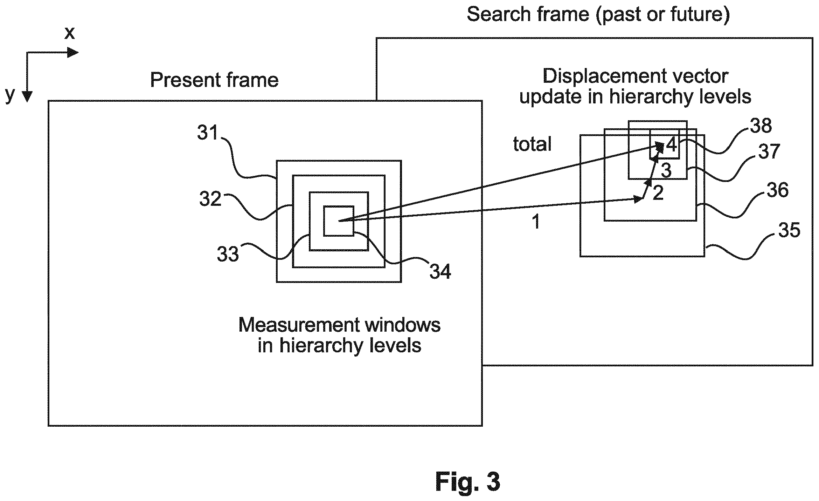

Fig. 3 shows a present frame and a past or future search frame. The present frame contains measurement windows 31 to 34 with decreasing size in corresponding hierarchy levels. The past or future search frame contains corresponding search windows 35 to 38 with decreasing size, and corresponding displacement vector updates 1 to 4, summing to a corresponding final total motion vector.

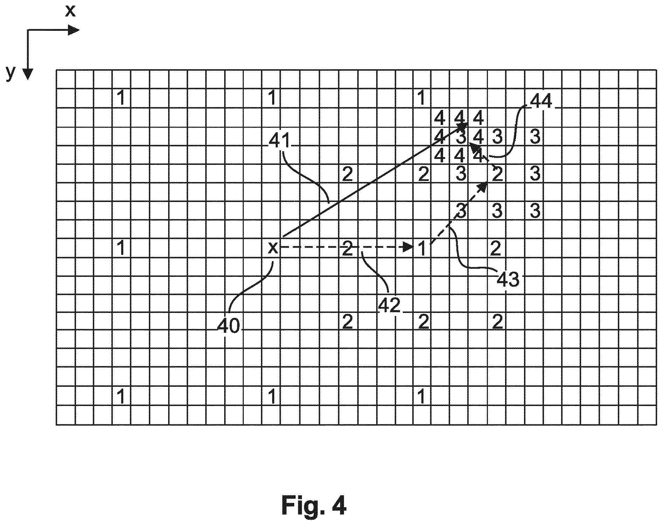

For the motion of pixel 40 from the present frame to its search window position, a log(D)-step search is depicted in Fig. 4, D being the maximal displacement +1. For six levels: max. displacement (i.e. search range) ±63/31/15/7/3/1 pixel would require a 6/5/4/3/2/1-step search, respectively, with step sizes of 32, 16, 8, 4, 2, 1 pixels.

As an example a 4-step search is depicted with step sizes of 8, 4, 2, 1 pels or lines. The corresponding lowpass-filtered and subsampled pixels of the search window are marked by '1' in the coarsest level, '2' in the next level, '3' in the following level, and '4' in the finest level of the hierarchy. In the coarsest level motion vector 42 is found, in the next level motion vector update 43 is found, in the following level motion vector update 44 is found, and in the last level a motion vector update is found which adds up to motion vectors 42 to 44 to the total or final motion vector 41.

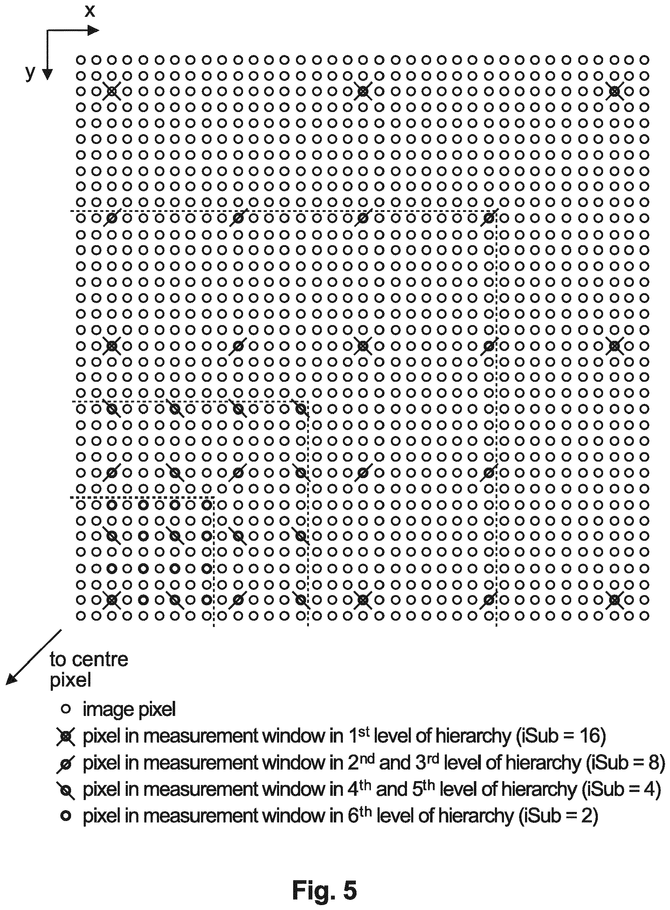

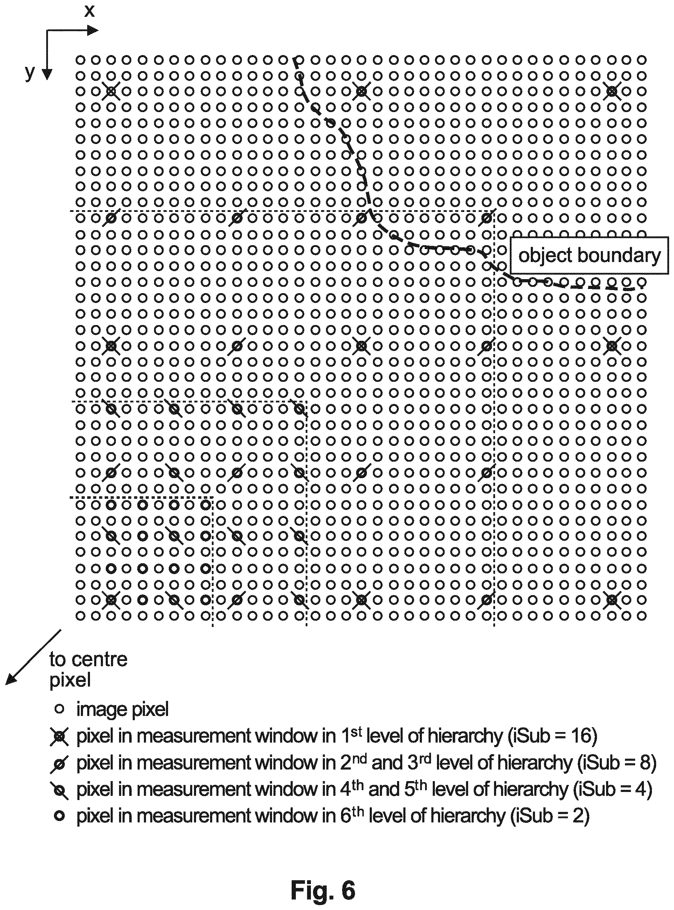

Fig. 5 shows the principle of quasi-subsampling in the measurement window, and Fig. 6 shows the principle of quasi-subsampling in a measurement window which contains an object boundary. The crossed pixels are used in ME in the 1st level, and their DFD values are used for segmentation. These pixels are interpolated to the ascending-dash pixels used in ME in the 2nd/3rd level, and their DFD values are used for segmentation. These pixels are interpolated to the descending-dash pixels used in ME in the 4th/5th level, and their DFD values are used for segmentation. These pixels are interpolated to the bold-marked pixels used in ME in the 6th level, and their DFD values are again used for segmentation. That is, the segmentation is coarse and available for a large area in the 1st level, while increasingly finer in an ever smaller part along the levels of the hierarchy.

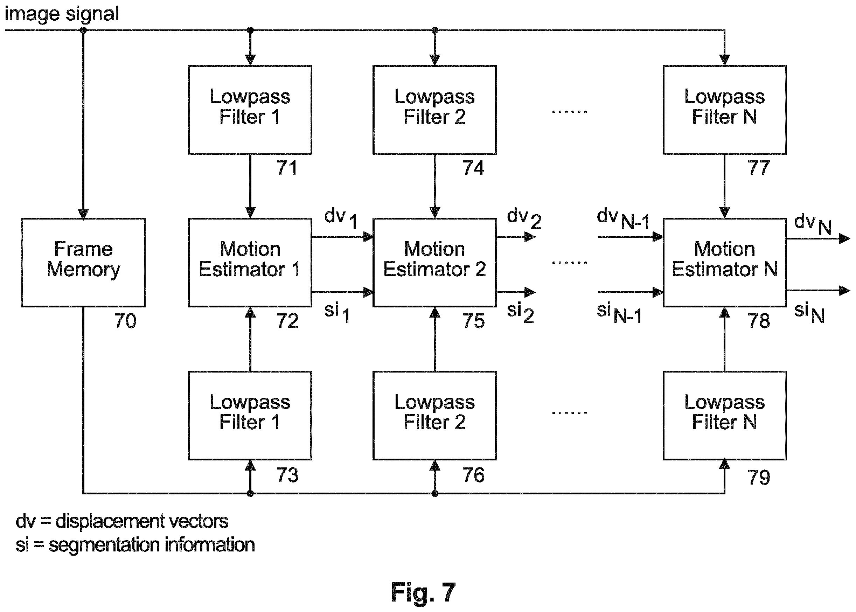

Fig. 7 shows a hierarchical motion estimator with segmentation. The image input signal is fed to a set of lowpass filters 71, 74, 77 with increasing pass bandwidth, and via a frame memory 70 to a corresponding set of lowpass filters 73, 76, 79 with correspondingly increasing pass bandwidth. The output signals of lowpass filters 71 and 73 are used for motion estimation 72 in the coarsest, first hierarchy level. The output signals of lowpass filters 74 and 76 are used for motion estimation 75 in the second hierarchy level, and so on. The output signals of lowpass filters 77 and 79 are used for motion estimation in the last (i.e. finest) hierarchy level, and motion estimator 78 outputs the final displacement vector.

Motion estimator 72 passes its motion or displacement vector or vectors $dv_1$ found as well as the corresponding segmentation information $si_1$ found by the absolute pixel DFD values as described above to motion estimator 75 for update. Motion estimator 75 passes its motion or displacement vector or vectors $dv_2$ found as well as the corresponding segmentation information $si_2$ found to motion estimator 78 for update. Motion estimator 78 receives displacement vector or vectors $dv_{N-1}$ as well as the corresponding segmentation information $si_{N-1}$ and outputs the final displacement vector or vectors $dv_N$ as well as the corresponding final segmentation information $si_N$.

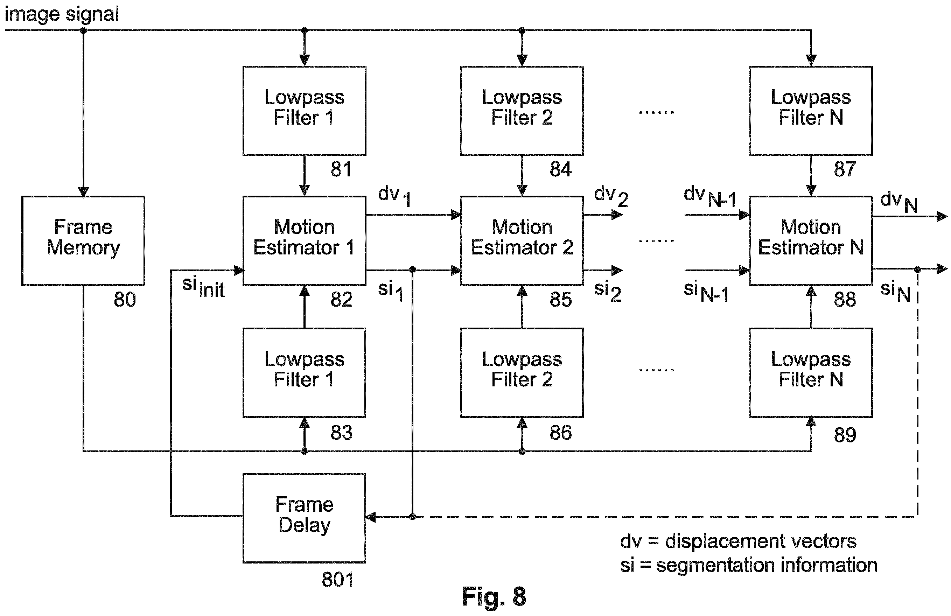

Fig. 8 shows a hierarchical motion estimator with segmentation initialisation. The image input signal is fed to a set of lowpass filters 81, 84, 87 with increasing pass bandwidth, and via a frame memory 80 to a corresponding set of lowpass filters 83, 86, 89 with correspondingly increasing pass bandwidth. The output signals of lowpass filters 81 and 83 are used for motion estimation 82 in the coarsest, first hierarchy level. The output signals of lowpass filters 84 and 86 are used for motion estimation 85 in the second hierarchy level, and so on. The output signals of lowpass filters 87 and 89 are used for motion estimation in the last (i.e. finest) hierarchy level, and motion estimator 88 outputs the final displacement vector.

Motion estimator 82 passes its motion or displacement vector $dv_1$ found as well as the corresponding segmentation information $si_1$ found by the absolute pixel DFD values as descibed above to motion estimator 85 for update. Motion estimator 85 passes its motion or displacement vector or vectors $dv_2$ found as well as the corresponding segmentation information $si_2$ found to motion estimator 88 for update. Motion estimator 88 receives displacement vector or vectors $dv_{N-1}$ as well as the corresponding segmentation information $si_{N-1}$ and outputs the final dispacement vector or vectors $dv_N$ as well as the corresponding final segmentation information $si_N$. The segmentation information $si_1$ output from motion estimator 82 (and possibly the segmentation information $si_N$ output from motion estimator 88) is fed to a frame delay 801, which outputs the corresponding segmentation information $si_1$ from the previous-frame motion estimation as an initialisation segmentation information $si_{init}$ to motion estimator 82 for evaluation.

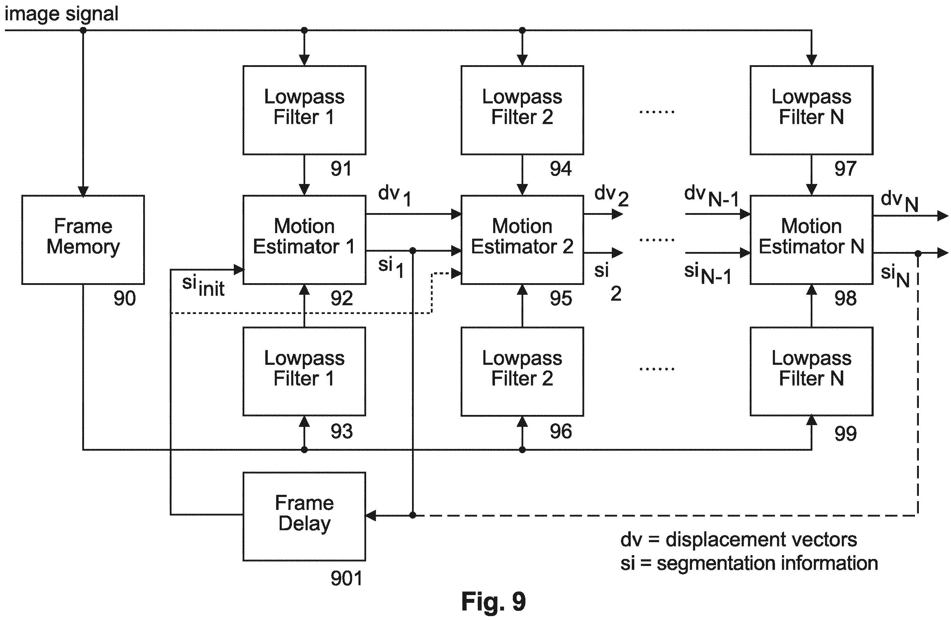

Fig. 9 basically corresponds to Fig. 8, but the initialisation segmentation information $si_{init}$ fed to motion estimator 92 is also fed to (and evaluated in) motion estimator 95.

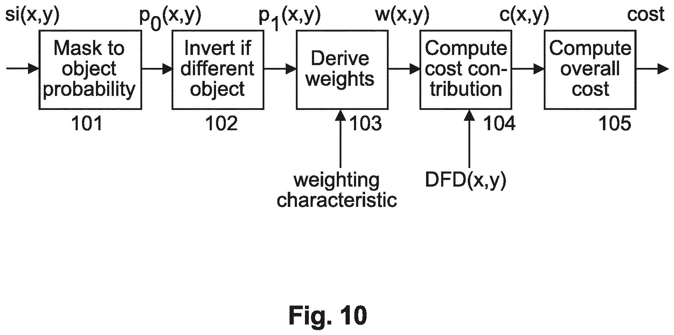

Fig. 10 depicts cost computation in the motion estimation using segmentation information. The segmentation information $si(x,y)$ is input to a mask-to-object probability calculation step or stage 101, which outputs a corresponding probability value $p_0(x,y)$ for an image object in a search window, cf. eq. (10). According to eq. (13), $p_0(x,y)$ is subtracted from '1' in an 'inversion' step or stage 102 if necessary, so as to output a corresponding probability value $p_1(x,y)$. Using a predetermined weighting characteristic for $p_1(x,y)$, corresponding weights $w(x,y)$ are calculated in weight deriving step or stage 103, cf. eq. (14). From $w(x,y)$ and related DFD values $DFD(x,y)$, a cost contribution of pixel $(x,y)$, i.e. $c(x,y) = p_1(x,y) \cdot |DFD(x,y)|$ is computed in step or stage 104. In step or stage 105 an overall cost value *cost* is computed therefrom as defined in equations (11), (12) or (19).

The described processing can be carried out by a single processor or electronic circuit, or by several processors or electronic circuits operating in parallel and/or operating on different parts of the complete processing.

The instructions for operating the processor or the processors according to the described processing can be stored in one or more memories. The at least one processor is configured to carry out these instructions.

References

[1] M. Bierling, "Displacement Estimation by Hierarchical Blockmatching", Proc. of 3rd SPIE Symposium on Visual Communications and Image Processing, Cambridge, USA, November 1988; SPIE, vol.1001, Visual Communications and Image Processing, pp.942-951.
[2] R. Thoma, M. Bierling, "Motion Compensating Interpolation Considering Covered and Uncovered Background", Proc. of the 1st International Workshop on 64 kbit/s Coding of Moving Video, 18 April 1989, Hanover, Germany.
[3] K.J. Yoon, I.S. Kweon, "Locally Adaptive Support-Weight Approach for Visual Correspondence Search", Proc. of the International Conference on Ubiquitous Robots and Ambient Intelligence, pp.506-514, 2004.
[4] Li W ET AL: "Image Sequence Coding by Multigrid Motion Estimation and Segmentation Based on Coding of Prediction Errors" , PROCEEDINGS OF SPIE, S P I E - INTERNATIONAL SOCIETY FOR OPTICAL ENGINEERING, US, vol. 2094, 1 Nov. 1993, pages 542-552, ISSN: 0277-786X, DOI: 10.1117/12.157973, ISBN: 978-1-62841-684-8

**Claims**

1.  Method for hierarchical motion estimation (70-79) in which motion vectors ($dv_1$, $dv_2$,..., $dv_{N-1}$) are refined in successive levels of increasing measurement window pixel density and/or decreasing measurement window size, including:

    - within each hierarchical level, after finding an optimum vector at at least one pixel in a frame, determining (72, 75, 78) based on said optimum vector the displaced frame difference DFD or absolute displaced frame difference |DFD| for each pixel of the measurement window;
    - carrying out (72, 75, 78) a segmentation of the measurement window into different moving object regions by forming pixel areas, which areas represent a segmentation mask ($si_1$, $si_2$, ..., $si_N$) for the measurement window;
    - estimating (72, 75, 78) for at least one of said segmentation areas a corresponding motion vector ($dv_N$)

    **characterized in that** said carrying out a segmentation of the measurement window comprises:

    - determining (72, 75, 78) within said measurement window two or more groups of pixels, wherein each of these pixel groups is **characterised by** a different range of displaced frame difference values or absolute displaced frame difference values for the pixels, said pixel areas being formed according to said groups of pixels;
    - wherein said segmentation mask values, denoted mask(x,y), are taken (101, 102) as probability values $p_0(x,y)$ = 1 - $mask(x,y)$ of a pixel ($x,y$) or pixels ($x,y$) to belong to a first or another object within said measurement window.

2.  Hierarchical motion estimator (70-79) in which motion vectors ($dv_1$, $dv_2$, ..., $dv_{N-1}$) are refined in successive levels of increasing measurement window pixel density and/or decreasing measurement window size, said hierarchical motion estimator including means adapted to:

    - within each hierarchical level, after finding an optimum vector at at least one pixel in a frame, determining (72, 75, 78) based on said optimum vector the displaced frame difference DFD or absolute displaced frame difference |DFD| for each pixel of the measurement window;
    - carrying out (72, 75, 78) a segmentation of the measurement window into different moving object regions by forming pixel areas, which areas represent a segmentation mask ($si_1$, $si_2$, ..., $si_N$) for the measurement window;
    - estimating (72, 75, 78) for at least one of said segmentation areas a corresponding motion vector ($dv_N$)

    **characterized in that,** for carrying out said segmentation of the measurement window,
    said hierarchical motion estimator comprises means adapted to:

    - determining (72, 75, 78) within said measurement window two or more groups of pixels, wherein each of these pixel groups is **characterised by** a different range of displaced frame difference values or absolute displaced frame difference values for the pixels, said pixel areas being formed according to said groups of pixels;
    - wherein said segmentation mask values, denoted mask(x,y), are taken (101, 102) as probability values $p_0(x,y)$ = 1 - $mask(x,y)$ of a pixel ($x,y$) or pixels ($x,y$) to belong to a first or another object within said measurement window.

3.  Method according to claim 1, or apparatus according to claim 2, wherein in each hierarchical level, except the finest level, the corresponding segmentation mask is stored (801; 901) for use as an initial segmentation mask ($si_{init}$) in the next level of the hierarchy.

4.  Method according to the method of claim 1 or 3, or apparatus according to the apparatus of claim 2 or 3, wherein a stored (801; 901) segmentation mask for a corresponding measurement window in a previous frame is used as an initial segmentation mask ($si_{init}$) in the first or coarsest hierarchy level for a measurement window in the present frame.

5.  Method according to the method of one of claims 1, 3 or 4, or apparatus according to the apparatus of one of claims 2 to 4, wherein a motion vector estimated for a segmentation area in a past or future frame is used as a candidate motion vector in the motion vector search for a segmentation area in a present frame.

6.  Method according to the method of one of claims 1 and 3 to 5, or apparatus according to the apparatus of one of claims 2 to 5, wherein for forming said segmentation area DFD values or absolute DFD values are mapped using threshold values to mask values representing the same or another object, and wherein a mask value of '0' represents object number '0' and a corresponding segmentation area within the current measurement window, and in the following finer hierarchy level the motion vector for each related segmentation area is updated.

7. Method according to the method of claim 6, or apparatus according to the apparatus of claim 6, wherein said mapping is the three-level function

$$\text{mask(x, y)} = \begin{cases} 0 & \text{if } |\text{DFD(x,y)}| < \text{thr}_{\text{low}} \\ 1 & \text{if } |\text{DFD(x,y)}| > \text{thr}_{\text{high}} \\ 0.5 & \text{otherwise} \end{cases} \quad .$$

8. Method according to the method of one of claims 4 to 7, or apparatus according to the apparatus of one of claims 4 to 7, wherein for a measurement window position in the present level of the hierarchy the values of the segmentation mask of the measurement window resulting from the previous level of the hierarchy at the same position are combined with the values of said initial segmentation mask from the corresponding measurement window of said previous frame in order to form the segmentation mask for use in motion estimation in the present level of the hierarchy.

9. Method according to the method of one of claims 1 and 3 to 8, or apparatus according to the apparatus of one of claims 2 to 8, wherein said probability values are inverted according to $p_1(x,y) = 1 - p_0(x,y)$ if the centre pixel of the measurement window has a segmentation information value $mask(x,y)$ higher than a predetermined threshold value, or if motion estimation is to be carried out for that part of the measurement window having a segmentation information value $mask(x,y)$ higher than a predetermined threshold value, whether or not it includes the centre pixel.

10. Method according to the method of claim 9, or apparatus according to the apparatus of claim 9, wherein said probability values $p_1(x,y)$ are weighted (103) using a weighting characteristic so as to provide corresponding weighting factors $w(x,y)$ for said absolute DFD values denoted $|DFD(x,y)|$ for calculating a cost function denoted *cost,* and wherein $cost = \sum_{x,y} w(p_1(x,y)) \cdot |DFD(x,y)|$ or $cost = \sum_{x,y} p_1(x,y).|DFD(x,y)|$.

11. Method according to the method of one of claims 1 and 3 to 8, or apparatus according to the apparatus of one of claims 2 to 8, wherein said probability values $p_0(x,y)$ are weighted (103) using a weighting characteristic so as to provide corresponding weighting factors $w(x,y)$ for said absolute DFD values denoted $|DFD(x,y)|$ for calculating a cost function denoted *cost,* and wherein $cost = \sum_{x,y} w(p_0(x,y)) \cdot |DFD(x,y)|$ or $cost = \sum_{x,y} p_0(x,y).|DFD(x,y)|$.

12. Method according to the method of one of claims 1 and 3 to 5, or apparatus according to the apparatus of one of claims 2 to 5, wherein for forming said segmentation information DFD values or absolute DFD values are mapped using a function which delivers multi-level or continuous segmentation values providing information on the probability of belonging to the same or another object within the present measurement window, and in the following finer hierarchy level the motion vector is updated depending on the related segmentation information.

13. Method according to the method of claim 12, or apparatus according to the apparatus of claim 12, wherein said mapping function is the non-linear function

$$\text{mask(x, y)} = \min\left(1, \max\left(0, \frac{|\text{DFD(x,y)}| - \text{thr}_{\text{low}}}{\text{thr}_{\text{high}} - \text{thr}_{\text{low}}}\right)\right) \, ,$$

wherein $mask(x,y)$ is the continuous segmentation information and $thr_{low}$ and $thr_{high}$ are two different threshold values.

14. Method according to the method of claim 12, or apparatus according to the apparatus of claim 12, wherein said mapping function is the exponential function

$$\text{mask(x, y)} = \max\left(0, 1 - e^{-\frac{|\text{DFD(x,y)}| - \text{thr}_{\text{low}}}{\text{thr}_{\text{high}} - \text{thr}_{\text{low}}}}\right) \, ,$$

wherein $mask(x,y)$ is the continuous segmentation information and $thr_{low}$ and $thr_{high}$ are two parameter values characterising the shape of said translation function.

**15.** Computer program product comprising instructions which, when the program is executed by a computer, cause the computer to carry out the method according to one of claims 1 and 3 to 14.

**Patentansprüche**

**1.** Verfahren zur hierarchischen Bewegungsschätzung (70-79), in dem Bewegungsvektoren ($dv_1$, $dv_2$, ..., $dv_{N-1}$) auf aufeinanderfolgenden Ebenen zunehmender Messfenster-Pixeldichte und/oder abnehmender Messfenstergröße verfeinert werden, wobei das Verfahren enthält:

- Bestimmen (72, 75, 78) der Differenz verschobener Einzelbilder DFD oder der absoluten Differenz verschobener Einzelbilder |DFD| für jedes Pixel des Messfensters auf der Grundlage des optimalen Vektors, nachdem bei mindestens einem Pixel in einem Einzelbild ein optimaler Vektor ermittelt worden ist, auf jeder Hierarchieebene;
- Ausführen (72, 75, 78) einer Segmentierung des Messfensters in Gebiete unterschiedlicher bewegter Objekte durch Bilden von Pixelbereichen, wobei die Bereiche eine Segmentierungsmaske ($si_1$, $si_2$, ..., $si_N$) für das Messfenster repräsentieren;
- Schätzen (72, 75, 78) eines entsprechenden Bewegungsvektors ($dv_N$) für mindestens einen der Segmentierungsbereiche,

**dadurch gekennzeichnet, dass** das Ausführen einer Segmentierung des Messfensters umfasst:

- Bestimmen (72, 75, 78) von zwei oder mehr Gruppen von Pixeln innerhalb des Messfensters, wobei jede dieser Pixelgruppen durch einen anderen Bereich von Differenzwerten verschobener Einzelbilder oder absoluten Differenzwerten verschobener Einzelbilder für die Pixel charakterisiert ist, wobei die Pixelbereiche in Übereinstimmung mit den Gruppen von Pixeln gebildet werden;
- wobei die als mask(x, y) bezeichneten Segmentierungsmaskenwerte als Wahrscheinlichkeitswerte $p_0(x, y)$ = 1 - mask(x, y) eines Pixels (x, y) oder von Pixeln (x, y), zu einem ersten oder zu einem anderen Objekt innerhalb des Messfensters zu gehören, genommen werden (101, 102).

**2.** Vorrichtung (70-79) zur hierarchischen Bewegungsschätzung, in der Bewegungsvektoren ($dv_1$, $dv_2$, ..., $dv_{N-1}$) auf aufeinanderfolgenden Ebenen zunehmender Messfenster-Pixeldichte und/oder abnehmender Messfenstergröße verfeinert werden, wobei die Vorrichtung zur hierarchischen Bewegungsschätzung ausgelegt ist zum:

- Bestimmen (72, 75, 78) der Differenz verschobener Einzelbilder DFD oder der absoluten Differenz verschobener Einzelbilder |DFD| für jedes Pixel des Messfensters auf der Grundlage des optimalen Vektors, nachdem bei mindestens einem Pixel in einem Einzelbild ein optimaler Vektor ermittelt worden ist, auf jeder Hierarchieebene;
- Ausführen (72, 75, 78) einer Segmentierung des Messfensters in Gebiete unterschiedlicher bewegter Objekte durch Bilden von Pixelbereichen, wobei die Bereiche eine Segmentierungsmaske ($si_1$, $si_2$, ..., $si_N$) für das Messfenster repräsentieren;
- Schätzen (72, 75, 78) eines entsprechenden Bewegungsvektors ($dv_N$) für mindestens einen der Segmentierungsbereiche,

**dadurch gekennzeichnet, dass** die Vorrichtung zur hierarchischen Bewegungsschätzung zum Ausführen der Segmentierung des Messfensters Mittel umfasst, die ausgelegt sind zum:

- Bestimmen (72, 75, 78) von zwei oder mehr Gruppen von Pixeln innerhalb des Messfensters, wobei jede dieser Pixelgruppen durch einen anderen Bereich von Differenzwerten verschobener Einzelbilder oder absoluten Differenzwerten verschobener Einzelbilder für die Pixel charakterisiert ist, wobei die Pixelbereiche in Übereinstimmung mit den Gruppen von Pixeln gebildet werden;
- wobei die als mask(x, y) bezeichneten Segmentierungsmaskenwerte als Wahrscheinlichkeitswerte $p_0(x, y)$ = 1 - mask(x, y) eines Pixels (x, y) oder von Pixeln (x, y), zu einem ersten oder zu einem anderen Objekt innerhalb des Messfensters zu gehören, genommen werden (101, 102).

**3.** Verfahren nach Anspruch 1 oder Vorrichtung nach Anspruch 2, wobei die entsprechende Segmentierungsachse auf jeder Hierarchieebene mit Ausnahme der feinsten Ebene zur Verwendung als eine Anfangssegmentierungsmaske (si_{init}) auf der nächsten Ebene der Hierarchie gespeichert wird (801; 901) .

4. Verfahren nach dem Verfahren des Anspruchs 1 oder 3 oder Vorrichtung nach der Vorrichtung des Anspruchs 2 oder 3, wobei eine gespeicherte (801; 901) Segmentierungsmaske für ein entsprechendes Messfenster in einem vorhergehenden Einzelbild als eine Anfangssegmentierungsmaske (si_{init}) auf der ersten oder gröbsten Hierarchieebene für ein Messfenster in dem vorliegenden Einzelbild verwendet wird.

5. Verfahren nach dem Verfahren eines der Ansprüche 1, 3 oder 4 oder Vorrichtung nach der Vorrichtung eines der Ansprüche 2 bis 4, wobei ein für einen Segmentierungsbereich in einem vergangenen oder künftigen Einzelbild geschätzter Bewegungsvektor in der Bewegungsvektorsuche für einen Segmentierungsbereich in einem gegenwärtigen Einzelbild als ein Kandidatenbewegungsvektor verwendet wird.

6. Verfahren nach dem Verfahren eines der Ansprüche 1 und 3 bis 5 oder Vorrichtung nach der Vorrichtung eines der Ansprüche 2 bis 5, wobei zum Bilden des Segmentierungsbereichs DFD-Werte oder absolute DFD-Werte unter Verwendung von Schwellenwerten abgebildet werden, um Werte, die dasselbe oder ein anderes Objekt repräsentieren, zu maskieren, und wobei ein Maskenwert '0' die Objektnummer '0' und einen entsprechenden Segmentierungsbereich innerhalb des gegenwärtigen Messfensters repräsentiert und wobei der Bewegungsvektor für jeden zugehörigen Segmentierungsbereich auf der nächstfeineren Hierarchieebene aktualisiert wird.

7. Verfahren nach dem Verfahren nach Anspruch 6 oder Vorrichtung nach der Vorrichtung nach Anspruch 6, wobei die Abbildung die Dreiebenenfunktion

$$\text{mask(x, y)} = \begin{cases} 0 & \text{für } |\text{DFD(x, y)}| < \text{thr}_{low} \\ 1 & \text{für } |\text{DFD(x, y)}| > \text{thr}_{high} \\ 0,5 & \text{sonst} \end{cases}$$

ist.

8. Verfahren nach dem Verfahren eines der Ansprüche 4 bis 7 oder Vorrichtung nach der Vorrichtung eines der Ansprüche 4 bis 7, wobei die Werte der Segmentierungsmaske des Messfensters, die sich aus der vorhergehenden Ebene der Hierarchie an derselben Position ergeben, für eine Messfensterposition auf der gegenwärtigen Ebene der Hierarchie mit den Werten der Anfangssegmentierungsmaske von dem entsprechenden Messfenster des vorhergehenden Einzelbilds kombiniert werden, um die Segmentierungsmaske zur Verwendung bei der Bewegungsschätzung auf der gegenwärtigen Ebene der Hierarchie zu bilden.

9. Verfahren nach dem Verfahren eines der Ansprüche 1 und 3 bis 8 oder Vorrichtung nach der Vorrichtung eines der Ansprüche 2 bis 8, wobei die Wahrscheinlichkeitswerte in Übereinstimmung mit $p_1(x, y) = 1 - p_0(x, y)$ invertiert werden, falls das mittlere Pixel des Messfensters einen höheren Segmentierungsinformationswert mask(x, y) als einen vorgegebenen Schwellenwert besitzt oder falls die Bewegungsschätzung für diesen Teil des Messfensters mit einem höheren Segmentierungsinformationswert mask(x, y) als ein vorgegebener Schwellenwert ausgeführt werden soll, unabhängig davon, ob er das Mittelpixel enthält.

10. Verfahren nach dem Verfahren nach Anspruch 9 oder Vorrichtung nach der Vorrichtung nach Anspruch 9, wobei die Wahrscheinlichkeitswerte $p_1(x, y)$ unter Verwendung einer Gewichtungscharakteristik in der Weise gewichtet werden (103), dass sie für die als |DFD(x, y)| bezeichneten absoluten DFD-Werte entsprechende Gewichtungsfaktoren w(x, y) bereitstellen, um eine als cost bezeichnete Kostenfunktion zu berechnen, und wobei

$$\text{cost} = \sum_{x,y} w\left(p_1(x, y)\right) \cdot |\text{DFD(x, y)}|$$

oder

$$\text{cost} = \sum_{x,y} p_1(x, y) \cdot |\text{DFD(x, y)}|$$

ist.

11. Verfahren nach dem Verfahren eines der Ansprüche 1 und 3 bis 8 oder Vorrichtung nach der Vorrichtung eines der Ansprüche 2 bis 8, wobei die Wahrscheinlichkeitswerte $p_0(x, y)$ unter Verwendung einer Gewichtungscharakteristik in der Weise gewichtet werden (103), dass sie entsprechende Gewichtungsfaktoren $w(x, y)$ für die als $|DFD(x, y)|$ bezeichneten absoluten DFD-Werte zum Berechnen einer als cost bezeichneten Kostenfunktion bereitstellen, und wobei

$$\text{cost} = \sum_{x,y} w\left(p_0(x, y)\right) \cdot \left|DFD(x, y)\right|$$

oder

$$\text{cost} = \sum_{x,y} p_0(x, y) \cdot \left|DFD(x, y)\right|$$

ist.

12. Verfahren nach dem Verfahren eines der Ansprüche 1 und 3 bis 5 oder Vorrichtung nach der Vorrichtung eines der Ansprüche 2 bis 5, wobei zum Bilden der Segmentierungsinformationen DFD-Werte oder absolute DFD-Werte unter Verwendung einer Funktion abgebildet werden, die Mehrebenen- oder kontinuierliche Segmentierungswerte liefert, die Informationen über die Wahrscheinlichkeit bereitstellen, zu demselben oder zu einem anderen Objekt innerhalb des gegenwärtigen Messfensters zu gehören, und wobei der Bewegungsvektor auf der nächstfeineren Hierarchieebene in Abhängigkeit von den zugehörigen Segmentierungsinformationen aktualisiert wird.

13. Verfahren nach dem Verfahren nach Anspruch 12 oder Vorrichtung nach der Vorrichtung nach Anspruch 12, wobei die Abbildungsfunktion die nichtlineare Funktion

$$\text{mask}(x, y) = \min\left(1, \max\left(0, \frac{|\ DFD(x, y)\ | - thr_{low}}{thr_{high} - thr_{low}}\right)\right)$$

ist, wobei $\text{mask}(x, y)$ die kontinuierlichen Segmentierungsinformationen sind und $thr_{low}$ und $thr_{high}$ unterschiedliche Schwellenwerte sind.

14. Verfahren nach dem Verfahren nach Anspruch 12 oder Vorrichtung nach der Vorrichtung nach Anspruch 12, wobei die Abbildungsfunktion die Exponentialfunktion

$$\text{mask}(x, y) = \max\left(0, 1 - e^{-\frac{|DFD(x, y)| - thr_{low}}{thr_{high} - thr_{low}}}\right)$$

ist, wobei $\text{mask}(x, y)$ die kontinuierlichen Segmentierungsinformationen sind und wobei $thr_{low}$ und $thr_{high}$ zwei Parameterwerte sind, die die Gestalt der Translationsfunktion charakterisieren.

15. Computerprogrammprodukt, das Anweisungen umfasst, die, wenn das Programm durch einen Computer ausgeführt wird, veranlassen, dass der Computer das Verfahren nach einem der Ansprüche 1 und 3 bis 14 ausführt.

**Revendications**

1. Procédé d'estimation de mouvement hiérarchique (70-79) dans lequel des vecteurs de mouvement ($dv_1$, $dv_2$, ..., $dv_{N-1}$) sont affinés dans des niveaux successifs d'augmentation de la densité de pixels de la fenêtre de mesure et/ou de diminution de la taille de la fenêtre de mesure, incluant :

   - au sein de chaque niveau hiérarchique, après l'identification d'un vecteur optimal au niveau d'au moins un pixel dans une trame, la détermination (72, 75, 78) sur la base dudit vecteur optimal de la différence de trame déplacée DFD ou de la différence de trame déplacée absolue |DFD| pour chaque pixel de la fenêtre de mesure ;

- l'exécution (72, 75, 78) d'une segmentation de la fenêtre de mesure en différentes régions d'objets mobiles par la formation de zones de pixels, lesquelles zones représentent un masque de segmentation ($si_1$, $si_2$, ..., $si_N$) pour la fenêtre de mesure ;

- l'estimation (72, 75, 78) pour au moins l'une desdites zones de segmentation d'un vecteur de mouvement correspondant ($dv_N$) **caractérisé en ce que** ladite exécution d'une segmentation de la fenêtre de mesure comprend :

- la détermination (72, 75, 78) au sein de ladite fenêtre de mesure de deux groupes de pixels ou plus, où chacun de ces groupes de pixels est **caractérisé par** une plage différente de valeurs de différence de trame déplacée ou de valeurs de différence de trame déplacée absolue pour les pixels, lesdites zones de pixels étant formées en fonction desdits groupes de pixels ;

- dans lequel lesdites valeurs de masque de segmentation, désignées mask (x,y), servent (101, 102) de valeurs de probabilité $p_0(x,y) = 1 - mask(x,y)$ d'un pixel **(x,y)** ou de pixels **(x,y)** pour l'appartenance à un premier objet ou à un autre objet dans ladite fenêtre de mesure.

2. Estimateur de mouvement hiérarchique (70-79) dans lequel des vecteurs de mouvement ($dv_1$, $dv_2$, ..., $dv_{N-1}$) sont affinés dans des niveaux successifs d'augmentation de la densité de pixels de la fenêtre de mesure et/ou de diminution de la taille de la fenêtre de mesure, ledit estimateur de mouvement hiérarchique incluant un moyen adapté pour :

- au sein de chaque niveau hiérarchique, après l'identification d'un vecteur optimal au niveau d'au moins un pixel dans une trame, déterminer (72, 75, 78) sur la base dudit vecteur optimal la différence de trame déplacée DFD ou la différence de trame déplacée absolue |DFD| pour chaque pixel de la fenêtre de mesure ;

- exécuter (72, 75, 78) une segmentation de la fenêtre de mesure en différentes régions d'objets mobiles en formant des zones de pixels, lesquelles zones représentent un masque de segmentation ($si_1$, $si_2$, ..., $si_N$) pour la fenêtre de mesure ;

- estimer (72, 75, 78) pour au moins l'une desdites zones de segmentation un vecteur de mouvement correspondant ($dv_N$) **caractérisé en ce que** pour l'exécution de ladite segmentation de la fenêtre de mesure, ledit estimateur de mouvement hiérarchique inclut un moyen adapté pour :

- déterminer (72, 75, 78) au sein de ladite fenêtre de mesure deux groupes de pixels ou plus, où chacun de ces groupes de pixels est **caractérisé par** une plage différente de valeurs de différence de trame déplacée ou de valeurs de différence de trame déplacée absolue pour les pixels, lesdites zones de pixels étant formées en fonction desdits groupes de pixels ;

- dans lequel lesdites valeurs de masque de segmentation, désignées mask(x,y), servent (101, 102) de valeurs de probabilité $p_0(x,y) = 1 - mask(x,y)$ d'un pixel **(x,y)** ou de pixels **(x,y)** pour l'appartenance à un premier objet ou à un autre objet dans ladite fenêtre de mesure.

3. Procédé selon la revendication 1, ou appareil selon la revendication 2, dans lequel au sein de chaque niveau hiérarchique, à l'exception du niveau le plus fin, le masque de segmentation correspondant est stocké (801 ; 901) pour être utilisé comme masque de segmentation initial ($si_{init}$) dans le niveau suivant de la hiérarchie.

4. Procédé selon le procédé de la revendication 1 ou 3, ou appareil selon l'appareil de la revendication 2 ou 3, dans lequel un masque de segmentation stocké (801 ; 901) pour une fenêtre de mesure correspondante dans une trame précédente est utilisé comme masque de segmentation initial ($si_{init}$) dans le premier niveau hiérarchique ou le niveau hiérarchique le plus approximatif pour une fenêtre de mesure dans la trame actuelle.

5. Procédé selon le procédé de l'une des revendications 1, 3 ou 4, ou appareil selon l'appareil de l'une des revendications 2 à 4, dans lequel un vecteur de mouvement estimé pour une zone de segmentation dans une trame passée ou future est utilisé comme vecteur de mouvement candidat dans la recherche d'une zone de segmentation dans une trame actuelle par un vecteur de mouvement.

6. Procédé selon le procédé de l'une des revendications 1 et 3 à 5, ou appareil selon l'appareil de l'une des revendications 2 à 5, dans lequel, pour former ladite zone de segmentation, des valeurs de DFD ou des valeurs de DFD absolue sont mappées à l'aide de valeurs de seuil pour masquer les valeurs représentant le même objet ou un autre objet, et dans lequel une valeur de masque de « 0 » représente le numéro d'objet « 0 » et une zone de segmentation correspondante dans la fenêtre de mesure actuelle, et dans le niveau hiérarchique le plus fin suivant le vecteur de mouvement de chaque zone de segmentation associée est mis à jour.

**7.** Procédé selon le procédé de la revendication 6, ou appareil selon l'appareil de la revendication 6, dans lequel ledit mappage est la fonction à trois niveaux

$$\mathrm{mask}(\mathrm{x},\mathrm{y}) = \begin{cases} 0 & \mathrm{si} \ |\mathrm{DFD}(\mathrm{x},\mathrm{y})| < \mathrm{thr}_{\mathrm{low}} \\ 1 & \mathrm{si} \ |\mathrm{DFD}(\mathrm{x},\mathrm{y})| > \mathrm{thr}_{\mathrm{high}} \\ 0.5 & \mathrm{sinon} \end{cases}$$

**8.** Procédé selon le procédé de l'une des revendications 4 à 7, ou appareil selon l'appareil de l'une des revendications 4 à 7, dans lequel, pour une position de fenêtre de mesure dans le niveau actuel de la hiérarchie, les valeurs du masque de segmentation de la fenêtre de mesure résultant du niveau précédent de la hiérarchie à la même position sont combinées avec les valeurs dudit masque de segmentation initial de la fenêtre de mesure correspondante de ladite trame précédente afin de former le masque de segmentation pour une utilisation dans l'estimation de mouvement dans le niveau actuel de la hiérarchie.

**9.** Procédé selon le procédé de l'une des revendications 1 et 3 à 8, ou appareil selon l'appareil de l'une des revendications 2 à 8, dans lequel lesdites valeurs de probabilité sont inversées selon $p_1(x,y) = 1 - p_0(x,y)$ si le pixel central de la fenêtre de mesure possède une valeur d'information de segmentation **mask(x,y)** supérieure à une valeur de seuil prédéterminée, ou si une estimation de mouvement doit être effectuée pour la partie de la fenêtre de mesure possédant une valeur d'information de segmentation **mask(x,y)** supérieure à une valeur de seuil prédéterminée, qu'elle inclue ou non le pixel central.

**10.** Procédé selon le procédé de la revendication 9, ou appareil selon l'appareil de la revendication 9, dans lequel lesdites valeurs de probabilité $p_1(x,y)$ sont pondérées (103) à l'aide d'une caractéristique de pondération de manière à fournir des facteurs de pondération correspondants w(x,y) pour lesdites valeurs de DFD absolue désignées $|DFD(x,y)|$ pour calculer une fonction de coût désignée **cost,** et où **cost** $= \Sigma_{x,y}(p_1(x,y)) \cdot |DFD(x,y)|$ ou **cost** $= \Sigma_{x,y}$ $p_1(x,y) \cdot |DFD(x,y)|$.

**11.** Procédé selon le procédé de l'une des revendications 1 et 3 à 8, ou appareil selon l'appareil de l'une des revendications 2 à 8, dans lequel lesdites valeurs de probabilité $p_0(x,y)$ sont pondérées (103) à l'aide d'une caractéristique de pondération de manière à fournir des facteurs de pondération correspondants **w(x,y)** pour lesdites valeurs de DFD absolue désignées $|DFD(x,y)|$ pour calculer une fonction de coût désignée cost, et où **cost** $= \Sigma_{x,y} w(p_0(x,y)) \cdot |DFD(x,y)|$ ou **cost** $= \Sigma_{x,y} p_0(x,y) \cdot |DFD(x,y)|$.

**12.** Procédé selon le procédé de l'une des revendications 1 et 3 à 5, ou appareil selon l'appareil de l'une des revendications 2 à 5, dans lequel pour former ladite information de segmentation, les valeurs de DFD ou les valeurs de DFD absolue sont mappées à l'aide d'une fonction qui délivre des valeurs de segmentation multi-niveau ou continue, fournissant des informations sur la probabilité d'appartenance au même objet ou à un autre objet dans la fenêtre de mesure actuelle, et dans le niveau hiérarchique le plus fin suivant le vecteur de mouvement est mis à jour en fonction de l'information de segmentation associée.

**13.** Procédé selon le procédé de la revendication 12, ou appareil selon l'appareil de la revendication 12, dans lequel ladite fonction de mappage est la fonction non linéaire

$$\mathrm{mask}(\mathrm{x},\mathrm{y}) = \min\left(1, \max\left(0, \frac{|\mathrm{DFD}(\mathrm{x},\mathrm{y})| - \mathrm{thr}_{\mathrm{low}}}{\mathrm{thr}_{\mathrm{high}} - \mathrm{thr}_{\mathrm{low}}}\right)\right) \ ,$$

où **mask(x,y)** correspond à l'information de segmentation continue et $\mathbf{thr_{low}}$ et $\mathbf{thr_{high}}$ sont deux valeurs de seuil différentes.

**14.** Procédé selon le procédé de la revendication 12, ou appareil selon l'appareil de la revendication 12, dans lequel ladite fonction de mappage est la fonction exponentielle

$$\text{mask}(x, y) = \max\left(0, 1 - e^{-\frac{|DFD(x,y)| - thr_{low}}{thr_{high} - thr_{low}}}\right),$$

où **mask(x,y)** correspond à l'information de segmentation continue et **thr$_{low}$** et **thr$_{high}$** sont deux valeurs de paramètre caractérisant la forme de ladite fonction de conversion.

**15.** Produit de programme informatique comprenant des instructions qui, lorsque le programme est exécuté par un ordinateur, indiquent à l'ordinateur d'exécuter le procédé selon l'une des revendications 1 et 3 à 14.

**Fig. 1**

image signal

| Lowpass Filter 1 | Lowpass Filter 2 | ...... | Lowpass Filter N |

Frame Memory  20

Motion Estimator 1  22

Motion Estimator 2  25

...... Motion Estimator N  28

displacement vectors

Lowpass Filter 1  23

Lowpass Filter 2  26

...... Lowpass Filter N  29

21  24  27

**Fig. 2**

EP 3 054 686 B1

Search frame (past or future)

Present frame

Displacement vector
update in hierarchy levels

38
37
36
35

4
3
2

total

1

x
y

Measurement windows
in hierarchy levels

31
32
33

34

Fig. 3

**Fig. 4**

## Fig. 5

o  image pixel

✖  pixel in measurement window in 1st level of hierarchy (iSub = 16)

⌀  pixel in measurement window in 2nd and 3rd level of hierarchy (iSub = 8)

◓  pixel in measurement window in 4th and 5th level of hierarchy (iSub = 4)

o  pixel in measurement window in 6th level of hierarchy (iSub = 2)

Fig. 6

Fig. 7

dv = displacement vectors
si = segmentation information

image signal

Fig. 8

dv = displacement vectors
si = segmentation information

EP 3 054 686 B1

Lowpass Filter N — 97

Motion Estimator N — 98

$dv_N$

$si_N$

$dv_{N-1}$

$si_{N-1}$

Lowpass Filter N — 99

Lowpass Filter 2 — 94

Motion Estimator 2 — 95

$dv_2$

$si\ 2$

Lowpass Filter 2 — 96

$dv\ 1$

$si\ 1$

Lowpass Filter 1 — 91

Motion Estimator 1 — 92

Lowpass Filter 1 — 93

$si_{init}$

Frame Delay — 901

Frame Memory — 90

image signal

dv = displacement vectors
si = segmentation information

**Fig. 9**

si(x,y)    $p_0(x,y)$    $p_1(x,y)$    w(x,y)    c(x,y)    cost

| Mask to object probability | Invert if different object | Derive weights | Compute cost con-tribution | Compute overall cost |
|---|---|---|---|---|
| 101 | 102 | 103 | 104 | 105 |

weighting characteristic

DFD(x,y)

**Fig. 10**

## REFERENCES CITED IN THE DESCRIPTION

**Non-patent literature cited in the description**

- Displacement Estimation by Hierarchical Block-matching. **M. BIERLING.** Proc. of 3rd SPIE Symposium on Visual Communications and Image Processing. Cambridge, November 1988, 942-951
- **R. THOMA ; M. BIERLING.** Motion Compensating Interpolation Considering Covered and Uncovered Background. *Proc. of the 1st International Workshop on 64 kbit/s Coding of Moving Video,* 18 April 1989
- **K.J. YOON ; I.S. KWEON.** Locally Adaptive Support-Weight Approach for Visual Correspondence Search. *Proc. of the International Conference on Ubiquitous Robots and Ambient Intelligence,* 2004, 506-514
- **LI W et al.** Image Sequence Coding by Multigrid Motion Estimation and Segmentation Based on Coding of Prediction Errors. *PROCEEDINGS OF SPIE, S P I E - INTERNATIONAL SOCIETY FOR OPTICAL ENGINEERING,* 01 November 1993, vol. 2094, ISSN 0277-786X, ISBN 978-1-62841-684-8, 542-552